# EUROPÄISCHE PATENTANMELDUNG

(11) **EP 1 569 057 A2**
(43) Veröffentlichungstag der Anmeldung: **31.08.2005**
(21) Anmeldenummer: 05101112.0
(22) Anmeldetag: 15.02.2005
(51) Int. Cl.: G05B 19/042

(54) **Bedienfeld für programmgesteuerte Haushaltsgeräte**

(30) Priorität: 25.02.2004 DE 102004009177
(71) Anmelder: BSH Bosch und Siemens Hausgeräte GmbH, 81739 München (DE)
(72) Erfinder: Geyer, Johannes, 85540 Gronsdorf (DE)

(57) **Zusammenfassung**

Die Erfindung bezieht sich auf Haushaltgeräte wie Herde, Mikrowellengeräte, Waschmaschinen und Trockner, deren frontseitige Bedienblenden ausgerüstet sind mit wenigstens einem Ein/Aus-Schalter z.B. zur Aktivierung von Programmen, von Zusatzprogrammen und/oder Zusatzparametern zur Manipulation vorgegebener Programme.

Nach Maßgabe der Erfindung werden über die Randbereiche der Ein/Aus-Schalter vom intelligenten Auswertesystem des Haushaltgerätes gesteuerte optische Signale ausgegeben. Damit sind der Schaltzustand der Ein/Aus-Schalter anzeigbar, sowie Fehlermeldungen und Statusanzeigen. Es wird weiterhin vorgeschlagen, die Randbereiche mehrerer Ein/Aus-Schalter bzgl. ihrer Signalausgabefunktion als eine Einheit zusammenzufassen und entsprechend anzusteuern. Derartig sind Balkenanzeigen erzeugbar, über die Betriebsdaten und Zustandsgrößen wie z.B. der Programmfortschritt darstellbar sind.

Die erfindungsgemäßen Anzeigen können aus größere Entfernungen wahrgenommen werden und sind leicht interpretierbar.

## Beschreibung

Die Erfindung bezieht sich auf programmgesteuerte Haushaltgeräte wie z.B. Herde, Mikrowellengeräte, Waschmaschinen und Trockner, die vornehmlich im Frontbereich eine Bedienblende aufweisen, auf der die zur Bedienung der Geräte und deren Funktionsüberwachung notwendigen Schalter und optischen Anzeigeelemente zusammengefasst angeordnet sind. Gewöhnlich werden zur Programmauswahl Drehschalter eingesetzt und Ein/Aus-Schalter z.B. zur Aktivierung von Zusatzfunktionen und zur Auswahl von Zusatzparametern, über die ein eingestelltes Programm manipuliert werden kann.

Wegen der bei modernen Haushaltgeräten angebotenen Leistungsbreite und der Vielfalt der Programmauswahl- und -Gestaltungsmöglichkeiten sind die Bedienelemente und deren Funktionen ausreichend zu kennzeichnen. Bei Ein/Aus-Schaltern geschieht dies dadurch, dass der Schaltzustand "Ein" durch ein optisches Leuchtsignal und die dem Schalter zugeordnete Funktion durch eine nahe am Schalter angebrachte Beschriftung oder ein Symbol erkennbar ist. Durch die räumliche Zuordnung der Zeichen und Beschriftungen zu den verschiedenen Schaltern ist die Gefahr von Missdeutungen gering.

Die Schaltung der Leuchtelemente erfolgt zumeist mechanisch über die Schalter selbst. Mit dem Betätigen der Schaltwippe bzw. des Tastknopfes wird entweder ein elektrischer Kontakt geschlossen oder es wird auf mechanische Weise die optische Verbindung zu einem permanent eingeschalteten Leuchtelement hergestellt. Das abgestrahlte Licht wird sichtbar über die Schaltwippe bzw. den Tastknopf, über den Randbereich des Ein/Aus-Schalters oder über eine im Gerätegehäuse vorhandene Öffnung, die nahe dem Schalter angeordnet ist. Die Wahrnehmung des Signals ist unproblematisch und aus einiger Entfernung möglich, die Deutung des Signals ist in nachteiliger Weise nur mit Hilfe der den Schaltern zugeordneten Kennzeichnungen möglich, was beim Vorhandensein mehrerer Schalter zu Verwechslungen führen kann.

Zunehmend werden Haushaltgeräte mit Displays ausgerüstet, über die neben Programmierhilfen auch Betriebsdaten wie Statusangaben und Fehlermeldungen in Klarschrift ausgegeben werden. Derartig komfortable Informationsausgaben sind für die Bedienperson eindeutig, Fehlinterpretationen der ausgegebenen Signale sind ausgeschlossen. Nachteilig bei der Informationsausgabe über ein Display ist, dass sich die Bedienperson zur Kenntnisnahme der Informationen in unmittelbarer Nähe des Gerätes aufhalten muss und zum Auslesen der Informationen eine gewisse Aufmerksamkeit erforderlich ist.

Es ist wünschenswert Informationen an die Bedienperson zu übermitteln durch optische Signalgeber, deren Wahrnehmung aus größerer Entfernung möglich ist und deren Informationsgehalt leicht erschließbar ist durch allgemein übliche und damit bekannte Leuchtzeichen. So ist z.B. das Aufblinken einer roten Leuchte als Signal für einen Störungsfall allgemein üblich und kann in seiner inhaltlichen Bedeutung als eindeutig gelten.

In der DE 100 58 410 A1 wird eine Anzeigevorrichtung vorgestellt zur Ausgabe von Signalen, die den Programmfortschritt anzeigen. Die Signalausgaben erfolgen über im Bedienfeld vorhandene Leuchtelemente, deren Lichtabstrahlung geräteintern gesteuert wird. So wird vorgeschlagen, bei einer Waschmaschine den Programmfortschritt mittels Blinksignale anzuzeigen und z.B. den Programmabschnitt Vorwäsche durch eine Blinkfolge - kurz - kurz - Pause - und in die Hauptwaschphase durch die Blinkfolge - kurz - lang - Pause - zu kennzeichnen. Ein solches Signal ist auch aus der Entfernung gut erkennbar und für seine Ausgabe ist nur ein Leuchtelement erforderlich. Nachteilig ist, dass diese abstrakte Codierung der Leuchtsignale vergleichbar ist mit Morsezeichen und wie bei diesen die inhaltliche Bedeutung der einzelnen Signale von der Bedienperson erlernt oder mit Hilfe einer Codierungstabelle erschlossen werden muss.

Der Erfindung liegt die Aufgabe zugrunde, durch geeignete Mittel die Vielfalt der aus größerer Entfernung wahrnehmbaren optischen Signale zu erhöhen und die Möglichkeiten für deren Wahrnehmung, sowie ihrer inhaltlichen Deutung durch die Bedienperson zu verbessern. Es wird angestrebt durch einen Kontrollblick "nebenbei", d.h. ohne besondere Konzentration, das Signal richtig deuten zu können. Es ist weiterhin Aufgabe der Erfindung, im Wesentlichen bekannte Bausteine zu verwenden, die der speziellen Aufgabe angepasst sind.

Erfindungsgemäß wird die Aufgabe durch die im kennzeichnenden Teil des Anspruchs 1 genannten Merkmale gelöst. Weitere vorteilhafte Ausgestaltungen der Erfindung sind in den Unteransprüchen enthalten.

Erfindungswesentlich ist, dass über die Randbereiche von Ein/Aus-Schaltern vom intelligenten Auswertesystem gesteuerte optische Signale ausgegeben werden. Damit ist nicht nur der Schaltzustand der Ein/Aus-Schalter anzeigbar, die Signale können auch mit anderen Inhalten unterlegt sein, wie Fehlermeldungen und Statusanzeigen.

In Ausgestaltung der Erfindung ist vorgesehen, mehrere Ein/Aus-Schalter ähnlicher Funktion zu einer Schalterzeile zusammenzufassen, derart dass nur über die die Schalterzeile umfassenden Randbereiche Licht abgestrahlt wird. Die Wahrnehmung der über die Schalter ausgegebenen Signale wird dadurch verbessert. Eine solche Anordnung fügt sich außerdem sehr gut ein in das Gesamtbild der Bedienblende. Nicht unwesentlich sind die technologischen Vorteile, die sich aus der Zusammenfassung zu einem Baustein ergeben.

In weiterer Ausgestaltung der Erfindung, sind die Randbereiche mehrerer Ein/Aus-Schalter bzgl. ihrer Signalausgabefunktion als eine Einheit zusammengefasst und werden entsprechend angesteuert. Daraus ergeben sich vielfältige Möglichkeiten die Signalausgaben zu gestalten, insbesondere lassen sich Betriebsdaten und Zustandsgrößen, die sich während eines Programmdurchlaufs ändern, in Form von Balkendiagrammen ausgeben.

Die Signalausgaben nach Maßgabe der Erfindung haben den Vorteil, dass sie, ausreichende Leuchtintensität vorausgesetzt, aus größerer Entfernung problemlos wahrgenommen werden können und bei günstiger Gestaltung leicht interpretierbar sind.

Weitere Ausgestaltungsmöglichkeiten und vorteilhafte Anwendungen der Erfindung werden nachstehend am Beispiel einer aus der DE 101 36 518 A1 bekannten Waschmaschine näher erläutert. Die zugehörigen Zeichnungen zeigen:

Fig. 1: Waschmaschine mit einer frontseitigen Beschickungsöffnung

Fig. 2: Programmauswahl-Schalter

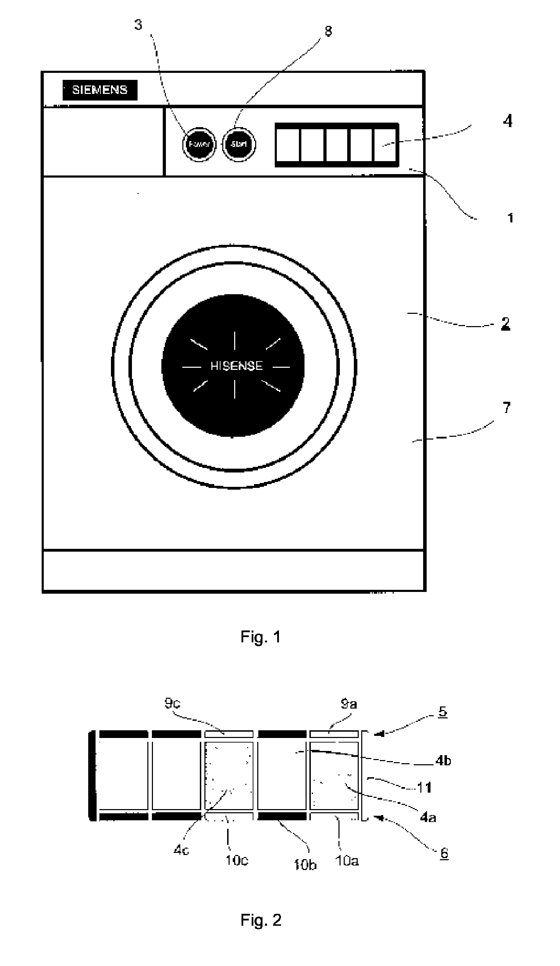

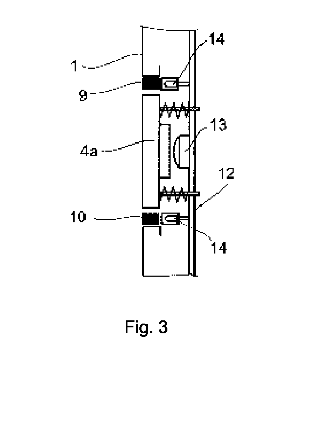

In Figur 1 abgebildet ist die Frontseite einer Waschmaschine 2 mit einer durch eine Tür 7 verschließbaren Beschickungsöffnung und mit einer im oberen Bereich angeordneten Bedienblende 1, auf der die Bedien- und Anzeigeelemente 3, 4, 8 angeordnet sind. Bei der bevorzugten Ausführungsform einer Waschmaschine 2 sind zur Auswahl der Waschprogramme mehrere gleichartige Tastschalter 4 vorhanden, die waagerecht in einer Reihe unmittelbar nebeneinander in der Bedienblende 1 angeordnet sind und denen jeweils ein spezielles Waschprogramm unterlegt ist. Die funktionale Zusammengehörigkeit der Tastschalter 4 ergibt sich für die Bedienperson in sinnfälliger Weise aus der optischen Wahrnehmung der Bedienblende 1. Neben dem Betriebsschalter 3 und der Starttaste 8 bilden die Programmschalter 4 erkennbar eine Einheit. Diese Art der Schalteranordnung ist platzsparend und sie verbessert das Erscheinungsbild der Bedienblende. Insbesondere vorteilhaft ist, dass die Schalterzeilen 4 vormontiert werden können und damit in der Endfertigung pro Gerät immer nur ein Bauteil zu fügen ist.

Im Ausführungsbeispiel sind fünf rechteckige Tastschalter 4 vorhanden, das bedeutet, es stehen fünf Waschprogramme alternativ zur Auswahl. Der Schaltzustand "Ein" der Tastschalter 4 wird in bekannter Weise durch Aufleuchten des Tastknopfes angezeigt, d.h. nach der Programmauswahl leuchtet immer genau ein Tastknopf, der anzeigt, welcher der Tastschalter 4 zuletzt gedrückt und welches Programm damit ausgewählt wurde. In der Darstellung der Fig. 2 ist der vierte Schalter 4 von links, erkennbar an der dunkel gefärbten Schaltertaste, eingeschaltet. Das ausgewählte Programm kann anschließend über den Schalter "Start" 8 in Gang gesetzt werden.

In den oberen und unteren Randbereichen 5, 6 der Schalter 4 sind LEDs als Leuchtmittel integriert. Jeder der einzelnen Schalterbereiche 9, 10 der Zeilen 5, 6 bildet eine Zelle, die getrennt von den anderen über die interne Gerätesteuerung schaltbar ist. Im Ausführungsbeispiel sind die oberen Randbereiche 5 der fünf Programmauswahl-Schalter 4 zur Anzeige des Programmfortschritts vorgesehen. Die Länge der fünf getrennt ansteuerbaren Schalterzellen 9 ist das analoge Maß für die Gesamtdauer eines Waschprogramms. Jeder Leuchtbereich 9 eines Schalters 4 steht für einen Zeitabschnitt. Im Beispiel zeigt der obere Leuchtbereich 9 des ersten Schalters 4 von links das erste Fünftel der Programmlaufzeit an und die rechts daneben liegenden Schalterbereiche 9 sind Anzeigen für die danach folgenden Zeitabschnitte.

Eine verbesserte Anzeige sieht vor, alle optisch aktivierbaren Bereiche 9 oberhalb der Tastschalter 4 anzusteuern und den Programmfortschritt über die unterschiedliche Helligkeit der Leuchtbereiche 9 erkennbar zu machen. Zur Anzeige kommen bei dieser in der Fig. 2 dargestellten Ausführungsvariante zwei nebeneinander liegende, waagerechte Balken 5, die sich durch unterschiedliche Leuchtintensität, kenntlich gemacht durch unterschiedliche Schwärzung der Bereiche 9, deutlich voneinander abheben. Aus dem Längenverhältnis der beiden Balken 5 kann die Bedienperson den Programmfortschritt leichter abschätzen. Die Balken 5 können auch farblich abgestuft sein, was ihre Erkennbarkeit zusätzlich verbessert.

Die obere Balkenanzeige 5 in Fig. 2 ist so geschaltet, dass mit dem Programmstart der linke Teilbereich 9a verstärkt aufleuchtet und dass im Zeittakt von zwanzig Minuten die rechts anschließenden, zunächst dunkler leuchtenden Bereiche 9b zugeschaltet werden. Der Zeittakt von zwanzig Minuten entspricht einem Fünftel der gesamten Programmdurchlaufzeit. Aus der Zeichnung ist ablesbar, dass das Programm nach dem Start den dritten Zeitabschnitt erreicht hat, d.h. das Waschprogramm mit einer Durchlaufzeit von hundert Minuten ist zu mehr als vierzig und weniger als sechzig Minuten abgelaufen.

Eine andere bevorzugte Möglichkeit zur Anzeige der Ablaufzeit besteht darin, den einzelnen Schaltzellen 9 der Balkenanzeige 5 eine feste Zeitdauer zu unterlegen. Unter der Maßgabe, dass jedem der fünf Schaltzellen 9 eine Zeitdauer von zwanzig Minuten unterlegt ist, würde die erfindungsgemäße Anzeige bei einem Waschprogramm, das eine voraussichtliche Programmlaufzeit von sechzig Minuten hat und zeitlich zur Hälfte durchgelaufen ist, zwei hell leuchtende Bereiche 9a links und einen dunkler leuchtenden Bereich 9b rechts daneben aufweisen. Das der Bedienperson sichtbare Balkendiagramm 5 umfasst insgesamt nur drei Leuchtbereiche 9. Die Variante mit fester Zeitzuordnung der einzelnen Leuchtbereiche 9 bietet den Vorteil, dass die Durchlaufzeiten der unterschiedlichen Programme für die Bedienperson erkennbar sind.

In beiden Ausführungsvarianten werden der Bedienperson nebeneinander zwei deutlich voneinander unterscheidbare Leuchtbalken 5 angezeigt, deren unterschiedliche Länge auch aus größerer Entfernung gut erkennbar ist. Aus dem Längenverhältnis der beiden Balken sind die angezeigten Werte bzw. Wertebereiche leicht abschätzbar. Fehler beim Ablesen der Anzeige sind auf diese Weise weitgehend vermeidbar.

Diese gestuften Anzeigen liefern beim praktischen Umgang mit dem Haushaltgerät in der Regel hinreichend genaue Werte. Eine verfeinerte Abstufung und damit eine größere Genauigkeit kann erzielt werden, in dem jeder Zelle 9 der Randbereiche 5, 6 mehr als eine Lichtquelle zugeordnet wird und jede dieser Lichtquellen getrennt ansteuerbar ist. Mit dieser verbesserten Lösungsvariante können der Bedienperson Informationen übermittelt werden, die in Bezug auf ihre Aussagekraft vergleichbar sind mit der Balkenanzeige in einem Display.

Die unteren Bereiche 10 der in Fig. 2 dargestellten Programmschalter 4 sind als eine weitere Signalausgabe-Einheit schaltungstechnisch zusammengefasst. Vorgesehen ist, während der Programmphase "Waschen" die Laugentemperatur und in der Phase "Schleudern" die Drehzahl über ein Balkendiagramm 6 anzuzeigen. Die Anzeigen 6 sind analog zu den oben beschriebenen Laufzeitausgaben 5 gestaltet. Andere quantifizierbare Informationen wie z.B. der kumulative Wasser- oder Energieverbrauch während eines Programmdurchlaufs können auf ähnliche Weise ausgegeben werden. Im Beispiel der Fig. 2 wird die Waschlaugentemperatur dargestellt. Die Abstufung pro Anzeigebereich 10 beträgt 15°C, die Anfangstemperatur ist auf 15°C festgesetzt. Unter dieser Vorgabe ist aus der Balkenanzeige 6 herauszulesen, dass die Laugentemperatur des laufenden Waschprogramms maximal 90°C erreichen wird und dass zum gegenwärtigen Zeitpunkt die Temperatur zwischen 30 und 45°C liegt.

Es ist weiterhin vorgesehen über die erfinderische Anzeige eine Fehlermeldung bei aufgetretener Störung auszugeben. Bei einem Fehler blinken alle Felder 9, 10 der Balkenanzeigen 5, 6 in schneller Folge hell auf. Die Statusanzeigen werden überblendet, bleiben aber erkennbar. Damit ist ablesbar, wie weit der Waschvorgang fortgeschritten ist. Die Bedienperson kann dann feststellen, in welchem Programmabschnitt der Fehler aufgetreten ist und ev. auf die Fehlerursache schließen. Durch Überblendungen ist auch der störungsfreie Betriebsablauf darstellbar. Dazu wird in sinnfälliger Weise ein grünes Blinksignal ausgegeben, wobei die einzelnen Leuchtbereiche 9 und 10 zeitlich so gesteuert werden, dass ein langsam durchlaufendes Band erkennbar ist.

Alle nach Maßgabe der Erfindung gestalteten Signalausgaben haben den wesentlichen Vorteil, dass sie aus größerer Entfernung wahrnehmbar sind und die mit den Signalen zu übermittelnden Informationsinhalte auch bei geringerer Konzentration von der Bedienperson aufgenommen werden können. Die Erfindung ist besonders vorteilhaft einsetzbar bei den vorbeschriebenen bekannten Geräten mit Tastschaltern zur Programmauswahl. Die besondere Einfachheit dieser Geräte in Bezug auf ihren Aufbau und ihre Bedienung bleiben erhalten, der Service wird erheblich verbessert. Die Attraktivität derart ausgerüsteter Geräte, sowie deren Akzeptanz durch den Kunden steigen. Die bei anderen Haushaltgeräten vorhandenen Displayanzeigen werden nicht vermisst.

**Bezugszeichen**
1. Bedienblende
2. Waschmaschine
3. Betriebsschalter
4. Ein/Aus-Schalter
5. oberer Leuchtbereich, -Balken
6. unterer Leuchtbereich, -Balken
7. Tür
8. Schalter "Programmstart
9. obere Schaltzellen
10. untere Schaltzellen

## Patentansprüche

1. Bedienfeld für programmgesteuerte Haushaltgeräte wie Herde, Mikrowellengeräte, Waschmaschinen und Trockner ausgerüstet mit wenigstens einem Ein/Aus-Schalter insbesondere zur Aktivierung von Programmen, von Zusatzprogrammen und/oder Zusatzparametern zur Manipulation vorgegebener Programme, und mit wenigstens einem Leuchtelement zur optischen Anzeige der Schaltposition der Ein/Aus-Schalter, sowie mit geräteintern gesteuerten Leuchtelementen zur Fehleranzeige und zur Kennzeichnung von Betriebszuständen **dadurch gekennzeichnet, dass** die Randbereiche wenigstens eines Ein/Aus-Schalters (4) zumindest teilweise aus einem optisch transparenten oder translutenten Material bestehen und dass die Randbereiche (5), (6) mit mindestens einem geräteintern steuerbaren Leuchtelement in optischer Verbindung stehen.

2. Bedienfeld nach Anspruch 1, **dadurch gekennzeichnet, dass** in den Randbereichen (5), (6) der Ein/Aus-Schalter (4) LEDs integriert sind.

3. Bedienfeld nach Anspruch 1, **dadurch gekennzeichnet, dass** die Randbereiche (5), (6) der Ein/Aus-Schalter (4) mit im Gehäuse des Haushaltgerätes (2) angeordneten Leuchtelementen in optischer Verbindung stehen.

4. Bedienfeld nach mindestens einem der vorstehenden Ansprüche, **dadurch gekennzeichnet, dass** die Leuchtelemente bzgl. ihrer Lichtemission steuerbar sind.

5. Bedienfeld nach mindestens einem der vorstehenden Ansprüche, **dadurch gekennzeichnet, dass** das über die Randbereiche (5), (6) der Ein/Aus-Schalter (4) abgestrahlte Licht verschiedenfarbig ist.

6. Bedienfeld nach mindestens einem der vorstehenden Ansprüche, **dadurch gekennzeichnet, dass** die den Leuchtsignalen unterlegten Informationen in einem inhaltlichen Zusammenhang mit der Funktion des jeweiligen Ein/Aus-Schalters (4) stehen.

7. Bedienfeld nach mindestens einem der vorstehenden Ansprüche, **dadurch gekennzeichnet, dass** mehrere Ein/Aus-Schalter (4) zu einer Schalterzeile zusammengefasst sind und dass nur über die die Schalterzeile umfassenden Randbereiche Licht abgestrahlt wird.

8. Bedienfeld nach Anspruch 7, **dadurch gekennzeichnet, dass** die Randbereiche (5), (6) mehrerer Ein/Aus-Schalter (4) bzgl. ihrer Signalausgabefunktion als eine Einheit zusammengefasst sind und entsprechend angesteuert werden.
